Europäisches Patentamt

European Patent Office

Office européen des brevets

(11) Veröffentlichungsnummer: **0 286 026 B1**

## EUROPÄISCHE PATENTSCHRIFT

(45) Veröffentlichungstag der Patentschrift: **15.04.92**

(21) Anmeldenummer: **88105273.2**

(22) Anmeldetag: **31.03.88**

(51) Int. Cl.⁵: **A22C 13/00**

(54) Lebensmittelhülle auf Basis von Cellulose mit vernetzten Eiweissverbindungen.

(30) Priorität: **07.04.87 DE 3711712**

(43) Veröffentlichungstag der Anmeldung:
**12.10.88 Patentblatt 88/41**

(45) Bekanntmachung des Hinweises auf die
Patenterteilung:
**15.04.92 Patentblatt 92/16**

(84) Benannte Vertragsstaaten:
**AT BE CH DE FR GB IT LI NL SE**

(56) Entgegenhaltungen:
**EP-A- 0 088 308**
**DE-B- 1 213 211**
**GB-A- 917 965**

(73) Patentinhaber: **HOECHST AKTIENGESELL-
SCHAFT**
**Postfach 80 03 20**
**W-6230 Frankfurt am Main 80(DE)**

(72) Erfinder: **Siebrecht, Manfred, Dr.**
**Buchenweg 10**
**W-6200 Wiesbaden(DE)**
Erfinder: **Hammer, Klaus-Dieter, Dr.**
**An der Hasenquelle 25**
**W-6500 Mainz-Mombach(DE)**
Erfinder: **Winter, Hermann**
**Am Schlosspark 93**
**W-6200 Wiesbaden(DE)**

## Beschreibung

Die Erfindung bezieht sich auf eine schlauchförmige Lebensmittelhülle, insbesondere künstliche Wursthaut für Rohwurst- und Brühwursttypen, aufgebaut aus einem Trägerschlauch auf Basis von Cellulosehydrat, der gegebenenfalls eine Faserverstärkung enthält. Die Erfindung bezieht sich ferner auf die Verwendung dieser Hülle und auf ein Verfahren zu ihrer Herstellung, bei dem man alkalische Viskose durch saure Koagulation in regenerierte Cellulose überführt.

Schlauchförmige Lebensmittelhüllen auf Basis von Cellulosehydrat mit nicht vorbehandelter Innenseite eignen sich nur bedingt zur Verwendung als Wursthüllen, weil das Wurstgut bei Frischwurst so fest an der Verpackungshülle haftet, daß diese sich bei Bedarf kaum von Füllgut entfernen läßt; bei Rohwurst wie z.B. Dauerwurst ist die Haftung dagegen so gering, daß sich die Verpackungshülle schon während des Trockenvorgangs bei der Lagerung vom Wurstgut trennt. Infolge des Ablösens der Hülle vom Wurstgut beim Trocknen der Dauerwurst schrumpft die Hülle mit dem Füllgut nicht mit, die Verpackungshülle wird daher faltig und unansehnlich.

Zur Lösung dieser Probleme wird in der EP-B-0 088 308 die Lehre gegeben, auf der Schlauchinnenseite einen Überzug aus einem wasserunlöslichen Harz, wie z.B. Eiweiß-Formaldehyd-Harz, und einem Öl vorzusehen. Die noch unvernetzte Eiweiß-Formaldehyd-Lösung wird auf die Innenseite des koagulierten Schlauches aus Cellulosehydrat-Gel aufgebracht und beim abschließenden Trocknen mit der Celluloseoberfläche verknüpft. Die Herstellung dieser Überzüge gelingt jedoch nicht befriedigend, insbesondere was die Gleichmäßigkeit des aufgebrachten Flächengewichts und damit die Schichtdicke des Überzugs betrifft.

Die auf die Celluloseoberfläche aufgebrachte Beschichtungsmenge, die nach dieser Druckschrift bei 40 bis 120 mg Harz je m$^2$ liegen soll, ist starken Schwankungen unterworfen, selbst bei Konstanthaltung der Konzentration der Lösung. Auch ist die exakte Einstellung der optimalen Auftragsmenge, die für eine Verbesserung der Haftungseigenschaften der Schlauchhülle verantwortlich ist, über die Konzentration der Lösung nicht möglich. Dies ist besonders nachteilig, da für jeden Wursttyp ein bestimmter, wesentlich engerer Bereich der Auftragsmenge im Vergleich zum vorbeschriebenen Gesamtbereich einzuhalten ist. Wird die optimale Auftragsmenge überschritten, so treten Schälschwierigkeiten auf, wird sie unterschritten, so löst sich die Schlauchhülle während der Lagerung der Wurst vom Füllgut ab.

Es ist somit Aufgabe der Erfindung, schlauchförmige Lebensmittelhüllen der eingangs genannten Art in der Weise zu verbessern, daß sich auf ihrer inneren Oberfläche Überzüge mit gleichmäßiger, optimaler Dicke ausbilden lassen. Auf diese Weise soll die auf der Innenseite aufgebrachte Menge an wirksamen Verbindungen, insbesondere auf Basis von wasserunlöslichen Harzen, zur Verbesserung der Hafteigenschaften zwischen Hülleninnenseite zur Wurstmasse, auf einen optimalen Wert eingestellt und weitgehend konstant gehalten werden können.

Diese Aufgabe wird gelöst durch die in Anspruch 1 genannte Schlauchhülle. Die abhängigen Ansprüche geben bevorzugte Ausführungsformen der Hülle an. Die Aufgabe wird ferner gelöst durch die Verwendung nach Anspruch 7 und das Verfahren nach Anspruch 8 sowie seine Weiterbildung nach Anspruch 9.

Die schlauchförmige Lebensmittelhülle besteht aus einem Trägerschlauch auf Basis von Cellulose, der gegebenenfalls mit einer Faserverstärkung, z.B. aus einem Vlies von Hanffasern oder einer Papiereinlage, versehen ist. Die Faserverstärkung wird beidseitig mit Viskose imprägniert, so daß der resultierende Schlauch nach der Regenerierung der Cellulose auf der äußeren und inneren Oberfläche eine Celluloseschicht aufweist.

Die Cellulose enthält als erfindungswesentlichen Zusatz eine oder mehrere Eiweißverbindungen, insbesondere natürliche Eiweißverbindungen tierischen oder pflanzlichen Ursprungs, welche bei Konzentrationen von 1 bis 20 Gew.-% in alkalischem wäßrigem Medium lösbar oder dispergierbar sind, eine dosierbare Viskosität aufweisen und in der alkalischen Viskoselösung ausreichend hydrolysebeständig sind. Zu diesen Verbindungen gehören Gelatine, Sojaprotein, Weizenprotein und Erdnußprotein, ganz besonders bevorzugt ist Casein. Diese Verbindungen sind leicht zugänglich und preisgünstig.

Als geeignetes Mittel zur Vernetzung der Eiweißmoleküle miteinander und mit den sie umgebenden Cellulosemolekülen werden alkalibeständige reaktive Verbindungen verwendet, welche sich zunächst unter Bildung von Methylolgruppen an die Aminogruppen der Eiweißverbindung addieren und bei der eingentlichen thermischen Vernetzung unter Wasserabspaltung mit den OH-Gruppen der Cellulosemoleküle reagieren.

Zu diesen Vernetzungsmitteln gehören insbesondere Aldehyde, wie Formaldehyd, und Dialdehyde, wie Glyoxal, Malonaldehyd und Glutaraldehyd. Von diesen ist Glyoxal bevorzugt.

Der Anteil des Vernetzungsmittels ist der jeweiligen speziellen Einweißverbindung anzupassen. Die Menge an Vernetzungsmittel muß ausreichen, um mit den Aminogruppen der Eiweißverbindungen zu reagieren. So sollten für Casein zweckmäßigerweise mindestens 3 % Vernetzungsmittel verwendet werden, um eine ausreichende Verknüpfung zu erzielen. Im allgemeinen beträgt die geeignete Menge 2 bis 10, insbesondere 3 bis 6 %, bezogen auf das Gewicht der Eiweißverbindung.

Die Lebensmittelhülle kann ohne weitere die Haftung zwischen Wurstmasse und Cellulosehülle beeinflussende Innenbeschichtung verwendet werden und ist als künstliche Wursthülle für leicht schälbare Wurstsorten geeignet. Hierzu gehören einige Brühwurstsorten, bei denen das Wurstbrät keine fettreichen Schwartenanteile enthält, oder Dauerwursttypen, wie Pfeffersalami, die nur über eine kurze Zeit gereift werden, so daß die Wurstmasse nur wenig schrumpft.

Für Dauerwurstsorten vom Typ der Edelsalami, die auf ihrer äußeren Oberfläche mit einem Edelschimmelbewuchs versehen sind und über viele Wochen und sogar Monate reifen müssen, ist eine zusätzliche Innenbeschichtung aus vernetzten kationischen Harzen erforderlich, welche vorzugsweise aus vernetzten Eiweißverbindungen bestehen, welche gegenüber Epichlorhydrin/Polyaminpolyamid-Harzen stärkere Haftung zur Wurstmasse zeigen. Die Vernetzung der Eiweißverbindung in der Innenbeschichtung erfolgt mit den gleichen Mitteln wie in der Trägerschicht, wobei auch hier Glyoxal das optimale Vernetzungsmittel ist. Der Anteil des Vernetzungsmittel in Bezug auf die Eiweißverbindung beträgt 2 bis 20, vorzugsweise 3 bis 8 Gew.-%. Diese Innenbeschichtung kann auch ein zusätzliches Öl enthalten, wie es in der EP-B-0 088 308 beschrieben ist, vorzugsweise ein Paraffinöl und/oder Siliconöl, insbesondere ein Triglyceridgemisch mit pflanzlichen Fettsäuren. Es genügen allerdings bereits wesentlich geringere Beschichtungsmengen an kationischem Harz, um einen guten Effekt für die Haftung zwischen der Cellulose und der getrockneten und geschrumpften Wurstmasse zu erzielen.

Die Herstellung der Schlauchhülle erfolgt nach dem bekannten Viskoseverfahren. Die Eiweißverbindung wird zusammen mit dem Vernetzungsmittel in alkalischer Lösung oder Dispersion der alkalischen Viskoselösung kurz vor dem Extrudieren der Viskose zudosiert. Die zudosierte Lösung bzw. Dispersion enthält gewöhnlich 1 bis 20, vorzugsweise 2 bis 15, insbesondere 3 bis 10 Gew.-% an Eiweißverbindung, bezogen auf die Cellulose, wobei das Vernetzungsmittel unter Bildung von Methylolgruppen an die Aminogruppen der Eiweißmoleküle gebunden ist.

Die Viskose wird unter üblichen Bedingungen koaguliert und regeneriert. Der Cellulosehydrat-Gel-Schlauch wird durch Waschbäder und Weichmacherbäder geführt und in aufgeblasenem Zustand bei 90 bis 150° C getrocknet. Bei dem Trockenprozeß werden die Eiweißmoleküle untereinander und mit den Cellulosemolekülen thermisch vernetzt.

Überraschenderweise wird die Eiweißverbindung auf dem Wege von der Spinndüse bis zum Trockner nur in unbedeutendem Maße herausgelöst. In dem getrockneten Schlauch finden sich noch mindestens 60 bis 90 Gew.-% der eindosierten Menge an Eiweißverbindung. So beträgt der Eiweißanteil in der Hülle bis zu 50, vorzugsweise 0,5 bis 25, insbesondere 0,8 bis 15 Gew.-%, bezogen auf die Cellulose. Zurückzuführen ist dieser Effekt auf die geringe Neigung der Eiweißmoleküle, nach der Fällungsreaktion aus dem Cellulosematerial herauszudiffundieren. Bemerkenswert ist ferner die über den Querschnitt der Celluloseschicht gleichmäßige Verteilung der Eiweißmoleküle, so daß auch in den oberflächennahen Bereichen eine ausreichend hohe Konzentration der Eiweißmoleküle anzutreffen ist.

Wenn auf der Innenschicht der Schlauchhülle ein zusätzlicher Überzug zur Verbesserung der Hafteigenschaften vorgesehen wird, so erfolgt diese Beschichtung zweckmäßigerweise vor dem Trocknen des Cellulosehydrat-Gels, wie es in der EP-B-0 088 308 beschrieben ist.

Durch die erfindungsgemäße Modifizierung der Celluloseschicht der Schlauchhülle wird auf einfache und billige Weise eine deutliche Verbesserung der Hafteigenschaften erreicht. Es werden Substanzen eingesetzt, die aus lebensmittelrechtlicher Sicht unbedenklich sind. Die Erfindung gestattet eine exakte Abstufung des Effektes der Innenbeschichtung und damit auch der Haftungseigenschaften. Die gewünschte Qualität läßt sich konstant einhalten, was bei kritischen Wurstsorten besonders wichtig ist. Die Haftung der Wurstmasse an der Celluloseinnenwand ist gleichmäßig, sowohl über den Umfang wie über die Länge der Schlauchhülle.

Die Erfindung wird durch die nachfolgeden Beispiele näher erläutert.

Beispiel 1

In 172 l einer alkalischen Viskoselösung (Cellulosexanthogenat) mit einem Cellulosegehalt von etwa 7 Gew.-% werden kurz vor der Spinndüse 6,4 l einer alkalischen Lösung der folgenden Zusammensetzung eindosiert:

0,6 kg Milcheiweiß (® Rovita FN 4, Hersteller Rovita, Aschau)

0,3 l Natronlauge, (4 gew.-%ig)

0,045 l Glyoxal, (40 gew.-%ig, entspr. 3% bezogen auf Milcheiweiß)

10,455 l Wasser.

In der resultierenden Mischung beträgt der Gehalt an Milcheiweiß (Casein) etwa 3 Gew.-%, bezogen auf die Cellulose.

Eine zu einem Schlauch gebogene Papierfaserbahn wird durch Spinndüsen, wie sie in der DE-C-19 65 130 beschrieben sind, auf der Innen- und Außenseite im Gewichtsverhältnis 7 : 3 mit dieser Viskoselösung imprägniert und in bekannter Weise durch ein saures Fällbad und Regenerierbäder geführt; der Schlauch wird gewaschen, mit Weichmacher (Glycerin) behandelt und in aufgeblasenem Zustand getrocknet. Der Schlauch hat ein Kaliber von 40 mm.

Der Eiweißgehalt im fertigen Schlauch beträgt 2,8 Gew.-%, bezogen auf die Cellulose bzw. 1,9 Gew.-%, bezogen auf das Gesamtgewicht. Der Schlauch enthält 93 % der eindosierten Eiweißmenge.

Aus dem Schlauch werden Würste vom Salamityp hergestellt und diese nach einer Reifezeit von 2 Wochen hinsichtlich ihrer Schälbarkeit beurteilt. Bei einer Bewertungsskala von 1 bis 5 und einem angestrebten Effekt von 2 bis 4 wird ein Wert von 2,5 erreicht.

## Beispiel 2

In analoger Weise wie in Beisiel 1 wird erneut ein Faserdarm vom Kaliber 40 mm hergestellt, wobei der Zusatz zur Viskoselösung geändert wird. Es werden in 172 l Viskoselösung 3,2 l alkalische Lösung folgender Zusammensetzung eindosiert:

0,6 kg Sojaprotein (® Purina PP 500 E) Hersteller: Ralston Purina Comp.)
0,3 l Alkalilauge (4 gew.-%ig)
0,045 l Glyoxal (40 gew.-%ig)
10,455 l Wasser

Der Gehalt an Sojaprotein beträgt 1,5 Gew.-%, bezogen auf die Cellulose, in der resultierenden Mischung. Der Anteil an Sojaprotein im fertigen Schlauch beträgt etwa 1,4 Gew.-%, bezogen auf die Cellulose, entsprechend 1 Gew.-%, bezogen auf das Schlauchgewicht. Von der eindosierten Menge an Sojaprotein sind noch 92 % im Endprodukt vorhanden.
Die analog Beispiel 1 beurteilte Schälbarkeit von Salami erhält den Wert 2.

## Beispiel 3

Entsprechend der vorhergehenden Beispiele wird ein beidseitig viskosierter Faserdarm mit einem Kaliber von 60 mm hergestellt. In 190 l alkalischer Viskoselösung werden 13,2 l einer alkalischen Lösung folgender Zusammensetzung zudosiert:

0,6 kg Sojaprotein (® Purina 500E)
0,3 l Alkalilauge (4 gew.-%ig)
0,045 l Glyoxal (40 gew.-%ig)
10,455 l Wasser

Der Gehalt an Sojaprotein in der resultierenden Mischung beträgt 5 Gew.-%, bezogen auf die Cellulose. Im fertiggestellten Schlauch beträgt der Gehalt an Sojaprotein 4,3 Gew.-%, bezogen auf die Cellulose oder 3 Gew.-%, bezogen auf das Gesamtgewicht des Schlauches. Das entspricht 86 % der eindosierten Menge an Sojaprotein.

Die analog Beispiel 1 beurteilte Schälbarkeit von Salami erhält den Wert 2,75.

## Beispiel 4

In 148 l alkalischer Viskoselösung werden 10,8 l einer alkalischen Lösung folgender Zusammensetzung eindosiert:

0,6 kg Weizenprotein (® Amypro SWP, Hersteller G.R. Amylum N.V., Aalst, Belgien)
0,3 l Alkalilauge (4 gew.-%ig)
0,045 l Glyoxal (40 gew.-%ig)
10,455 l Wasser

Der Gehalt an Weizenprotein in der resultierenden Mischung beträgt 5 Gew.-%.

Zur Herstellung einer verstärkungsfreien Cellulosehülle wird die Viskoselösung in bekannter Weise durch eine ringförmige Ringdüse direkt in ein saures Fällbad extrudiert, zu Cellulosehydrat-Gel regeneriert, der erhaltene Schlauch wird gewaschen, weichgemacht und getrocknet.

Der Gehalt an Weizenprotein im fertiggestellten Schlauch beträgt 3,8 Gew.-%, bezogen auf die Cellulose, bzw. 2,6 Gew.-%, bezogen auf das Gesamtgewicht. Etwa 76 Gew.-% der in die Viskoselösung zudosierten Menge an Weizenprotein sind im fertigen Produkt noch vorhanden.

Die Schälbarkeit einer Wurst vom Brühwursttyp (Bierwurst) wird mit 2 beurteilt. Es ist keinerlei unerwünschter Geleeabsatz zwischen Hülle und Wurstmasse zu beobachten.

## Beispiel 5

Es wird ein faserverstärkter Cellulosedarm wie in Beispiel 1 hergestellt. Das Herstellungsverfahren wird in der Weise abgewandelt, daß der koagulierte und zu Cellulosehydrat-Gel regenerierte Schlauch vor dem Trocknen auf seiner Innenseite mit einer zusätzlichen Lösung beschichtet und imprägniert wird, welche sich in einer Schlauchschlaufe befindet. Diese Lösung hat die folgende Zusammensetzung:

26,54 l Wasser
0,3 kg Milcheiweiß (® Rovita FN 4)
1,2 l Glycerin (Weichmacher)
0,127 l Alkalilauge (4 gew.-%ig)
0,023 l Glyoxal (40 gew.-%ig)
1,8 l Triglyceridemulsion auf Basis von gesättigten Fettsäuren (® Softenol Spezialöl, Hersteller Dynamit Nobel)

Der Gehalt an Milcheiweiß im fertigen Produkt steigt auf 3 Gew.-%, bezogen auf die Cellulose, bzw. 2 Gew.-%, bezogen auf das Gesamtgewicht der Hülle, an. Die Auftragsmenge auf der inneren Oberfläche beträgt 70 mg/m². Die Schälbarkeit von Salami wird mit 3,5 beurteilt.

### Beispiel 6

Der Schlauch des Beispiels 3 wird analog Beispiel 5 mit einer zusätzlichen Innenbeschichtung versehen. Die Schälbarkeit der Salami wird mit 3 beurteilt.

Der Gehalt an Gesamteiweiß beträgt 4,5 Gew.-%, bezogen auf die Cellulose, oder 3,1 Gew.-%, bezogen auf das Gesamtgewicht des Schlauches. Die Auftragsmenge auf der inneren Schlauchoberfläche beträgt 60 mg/m².

Zur Bestimmung der Auftragsmenge an Casein werden 200 mg Material von 500 cm² der inneren Schlauchoberfläche abgeschabt, der Stickstoffgehalt nach Kjeldahl bestimmt und hieraus die Caseinmenge berechnet.

### Beispiel 7

Zu 125 l einer alkalischen Viskoselösung mit einem Cellulosegehalt von etwa 7 Gew.-% werden vor der Spinndüse 18 l einer alkalisch eingestellten Protein-Lösung folgender Zusammensetzung zudosiert:

40,500 l Wasser
4,800 kg Casein ("Säure-Casein A 110" der Firma Meggle, Wasserburg)
2,400 l Natronlauge, (4 gew.-%ig)
0,360 l Glyoxal (40 gew.-%ig)

In der resultierenden Mischung beträgt der Gehalt an Casein 20 Gew.-%, bezogen auf die Cellulose. Eine zu einem Schlauch geformte Papierbahn wird durch Spinndüsen auf der Innen- und Außenseite mit dieser Viskoselösung im Gewichtsverhältnis 7 : 3 beaufschlagt. Anschließend wird der Schlauch in bekannter Weise durch ein saures Fällbad und Regenerierbäder geführt, gewaschen, mit Glycerin behandelt und zuletzt im aufgeblasenen Zustand getrocknet. Er hat ein Kaliber von 40 mm.

Der fertige Schlauch hat einen Casein-Gehalt von 7,6 Gew.-%, bezogen auf das Gesamtgewicht, bzw. 17,8 Gew.-%, bezogen auf die Cellulose. Die Schälbarkeit von Salami wird nach 6 Wochen Reifezeit mit 2,75 beurteilt.

### Patentansprüche

1. Schlauchförmige Lebensmittelhülle, insbesondere künstliche Wursthaut für Würste vom Rohwurst- oder Brühwursttyp, umfassend einen Trägerschlauch auf Basis von Cellulosehydrat, der gegebenenfalls faserverstärkt ist, dadurch gekennzeichnet, daß der Trägerschlauch in Alkali lösliche oder dispergierbare, sowie hydrolysebeständige Eiweißverbindung enthält, welche mit einer alkalibeständigen reaktiven Verbindung, vorzugsweise mit Aldehyd und/oder Dialdehyd, vernetzt ist, wobei der Trägerschlauch nach dem Viskoseverfahren hergestellt ist und die Eiweißverbindung zusammen mit dem vernetzenden Mittel der Viskoselösung vor der Koagulation zugegeben wurde.

2. Hülle nach Anspruch 1, dadurch gekennzeichnet, daß die Eiweißverbindung tierischen oder pflanzlichen Ursprungs ist und vorzugsweise Gelatine, Sojaprotein, Erdnußprotein oder Weizenprotein, insbesondere Casein, umfaßt.

3. Hülle nach Anspruch 1 oder 2, dadurch gekennzeichnet, daß die Eiweißverbindung mit Formaldehyd, Glyoxal, Malonaldehyd und Glutaraldehyd, vorzugsweise Glyoxal, vernetzt ist.

4. Hülle nach einem der Ansprüche 1 bis 3, dadurch gekennzeichnet, daß der Eiweißanteil in der Hülle bis zu 50, vorzugsweise 0,5 bis 25, insbesondere 0,8 bis 15 Gew.-%, bezogen auf die Cellulose, beträgt.

5. Hülle nach einem der Ansprüche 1 bis 4, dadurch gekennzeichnet, daß die Hülle auf ihrer inneren Oberfläche eine zusätzliche Beschichtung aus vernetzter kationischer Verbindung, vorzugsweise aus vernetzter Eiweißverbindung, insbesondere aus mit Glyoxal vernetztem Casein, aufweist.

6. Hülle nach einem der Ansprüche 1 bis 5, dadurch gekennzeichnet, daß die Innenbeschichtung ein Öl umfaßt, vorzugsweise ein Paraffinöl und/oder Siliconöl, insbesondere ein Triglyceridgemisch mit pflanzlichen Fettsäuren.

7. Verwendung der Hülle nach einem der vorhergehenden Ansprüche als künstliche Wursthülle für Rohwurst oder Brühwurst.

8. Verfahren zur Herstellung der Lebensmittelhülle nach einem der Ansprüche 1 bis 6, bei dem man alkalische Viskoselösung als Schlauch oder auf eine schlauchförmige Faserverstärkung extrudiert, die Viskose koaguliert und zu Cellulosehydrat-Gel regeneriert, und das erhaltene Produkt trocknet, dadurch gekennzeichnet, daß man die Viskose vor der Extrusion mit einer Eiweißverbindung und einem Vernetzer, vorzugsweise auf Basis von Aldehyd oder Dialdehyd, versetzt und die Vernetzung beim abschließenden Trockenprozeß durchführt.

9. Verfahren nach Anspruch 8, dadurch gekennzeichnet, daß die Konzentration der Eiweißverbindung in der Viskoselösung 1 bis 20, vorzugsweise 2 bis 15, insbesondere 3 bis 10 Gew.-%, bezogen auf die Cellulose, beträgt.

## Claims

1. A tubular food casing, in particular a synthetic sausage skin for sausages of the uncooked sausage or cooked sausage type, comprising a base tube based on cellulose hydrate which is optionally fiber-reinforced, wherein the base tube contains a protein compound which is soluble or dispersible in alkali, is hydrolysis-resistant and is crosslinked with an alkali-resistant reactive compound, preferably with an aldehyde and/or a dialdehyde, the base tube being produced according to the viscose process and the protein compound, together with the crosslinking agent, being added to the viscose solution prior to coagulation.

2. A casing as claimed in claim 1, wherein the protein compound is of animal or vegetable origin and preferably comprises gelatin, soya protein, groundnut protein or wheat protein, in particular casein.

3. A casing as claimed in claim 1 or 2, wherein the protein compound is crosslinked with formaldehyde, glyoxal, malonaldehyde and glutaraldehyde, preferably glyoxal.

4. A casing as claimed in any of claims 1 to 3, wherein the amount of protein in the casing is up to 50, preferably 0.5 to 25, in particular 0.8 to 15, % by weight, relative to the cellulose.

5. A casing as claimed in any of claims 1 to 4, wherein the casing has on its inner surface an additional coating of a crosslinked cationic compound, preferably of a crosslinked protein compound, in particular casein crosslinked with glyoxal.

6. A casing as claimed in any of claims 1 to 5, wherein the inner coating comprises an oil, preferably a paraffin oil and/or silicone oil, in particular a triglyceride mixture with vegetable fatty acids.

7. The use of the casing as claimed in one of the previous claims as a synthetic sausage casing for uncooked sausage or cooked sausage.

8. A process for the production of a food casing as claimed in any of claims 1 to 6, in which alkaline viscose solution is extruded as a tube or onto a tubular fiber reinforcement, the viscose is coagulated and regenerated to form cellulose hydrate gel, and the product obtained is dried, wherein a protein compound and a crosslinking agent, preferably based on an aldehyde or dialdehyde, is added to the viscose before extrusion, and the crosslinking is carried out during the subsequent drying process.

9. The process as claimed in claim 8, wherein the concentration of the protein compound in the viscose solution is 1 to 20, preferably 2 to 15, in particular 3 to 10, % by weight, relative to the cellulose.

## Revendications

1. Enveloppe en forme de boyau pour produits alimentaires, en particulier peau artificielle de saucisse pour saucisses du type saucisse crue ou saucisse à bouillir, comprenant un boyau de support à base d'hydrate de cellulose, qui est éventuellement renforcé à la fibre, caractérisée en ce que le boyau de support contient un composé protéique soluble ou dispersable dans un alcali ainsi que résistant à l'hydrolyse, qui est réticulé avec un composé réactif résistant aux alcalis, de préférence avec un aldéhyde et/ou un dialdéhyde, l'enveloppe de support étant fabriquée selon le procédé viscose, et le composé protéique étant ajouté, conjointement avec l'agent réticulant, à la solution de viscose avant la coagulation.

2. Enveloppe selon la revendication 1, caractérisée en ce que le composé protéique est d'origine animale ou végétale et comprend de préférence la gélatine, la protéine de soja, la protéine d'arachide ou la protéine de froment, en particulier la caséine.

3. Enveloppe selon la revendication 1 ou 2, caractérisée en ce que le composé protéique est réticulé avec le formaldéhyde, le glyoxal, l'aldéhyde malonique ou le glutaraldéhyde, de préférence le glyoxal.

4. Enveloppe selon l'une des revendications 1 à 3, caractérisée en ce que la fraction protéique dans l'enveloppe va jusqu'à 50, de préférence de 0,5 à 25, en particulier de 0,8 à 15 % en poids, par rapport à la cellulose.

5. Enveloppe selon l'une des revendications 1 à 4, caractérisée en ce que l'enveloppe présente sur sa surface interne un revêtement supplémentaire à base d'un composé cationique réticulé, de préférence à base d'un composé protéique réticulé, en particulier à base de caséine réticulée avec du glyoxal.

6. Enveloppe selon l'une des revendications 1 à 5, caractérisée en ce que le revêtement interne comprend une huile, de préférence une huile de paraffine et/ou une huile de silicone, en particulier un mélange de triglycérides avec des acides gras végétaux.

7. Utilisation de l'enveloppe selon l'une des revendications précédentes, en tant qu'enveloppe artificielle de saucisse pour saucisse crue ou saucisse à bouillir.

8. Procédé pour la fabrication d'une enveloppe pour produits alimentaires selon l'une des revendications 1 à 6, dans lequel on extrude une solution de viscose alcaline sous forme de boyau ou sur un renfort fibreux en forme de boyau, on coagule la viscose et la régénère en gel d'hydrate de cellulose, et on sèche le produit obtenu, caractérisé en ce que l'on ajoute à la viscose, avant l'extrusion, un composé protéique et un agent de réticulation de préférence à base d'un aldêhyde ou d'un dialdéhyde, et on effectue la réticulation lors du processus de séchage subséquent.

9. Procédé selon la revendication 8, caractérisé en ce que la concentration du composé protéique dans la solution de viscose va de 1 à 20, de préférence de 2 à 15, en particulier de 3 à 10 % en poids, par rapport à la cellulose.